# EUROPEAN PATENT APPLICATION

(11) **EP 4 786 170 A1**
(43) Date of publication of application: **05.08.2026**
(21) Application number: 24872426.2
(22) Date of filing: 26.09.2024
(51) Int. Cl.: B32B 27/00, B32B 27/04, B32B 27/30

(54) **DECORATIVE SHEET**

(30) Priority: 28.09.2023 JP 2023167753
(71) Applicant: Toppan Holdings Inc., Tokyo 110-0016 (JP)
(72) Inventor: SASAKI, Noriko, Tokyo 110-0016 (JP); AKUTSU, Erika, Tokyo 110-0016 (JP)
(74) Representative: TBK
(86) International application number: PCT/JP2024/034494
(87) International publication number: WO 2025/070642

(57) **Abstract**

A decorative sheet that is excellent in scratch resistance and adhesion between gloss adjustment layers is provided. A decorative sheet 1 includes a primary film layer 2 and a surface protective layer, the surface protective layer including a first gloss adjustment layer 5 provided on the primary film layer 2, the first gloss adjustment layer 5 containing, as a cured resin, a cured product of a first ionizing radiation-curable resin, the first ionizing radiation-curable resin being a first mixture of acrylate and methacrylate, and a second gloss adjustment layer 6 that partially covers an upper surface of the first gloss adjustment layer 5, the second gloss adjustment layer 6 containing, as a cured resin, a cured product of a second ionizing radiation-curable resin and having a higher specular gloss GS (60°) than the first gloss adjustment layer 5.

## Description

### [Technical Field]

The present invention relates to decorative sheets.

### [Background Art]

Decorative materials used for surface decoration of the interior and exterior of buildings, fixtures, furniture, and the like are generally in the form of decorative panels formed by attaching a decorative sheet to the surface of a substrate via an adhesive or the like. Decorative sheets are usually provided with desired design patterns such as wood grain patterns and stone grain patterns. In addition, decorative sheets that not only two-dimensionally express design patterns such as wood grain patterns and grain patterns, but also express a three-dimensional uneven texture similar to the surface of natural wood materials or stone materials have also been widely used mainly in applications where a sense of luxury is desired.

As a method for expressing a three-dimensional uneven texture together with a two-dimensional design pattern on the surface of decorative sheets, various methods have been conventionally devised and used depending on the purpose. For example, rather than actually forming unevenness on the surface of a decorative material, there is a method of using an optical illusion to visually express three-dimensional uneven texture by changing the surface gloss between portions to be expressed as recesses or projections and the other portions. According to this method, even if there is no actual unevenness that the observer can perceive, it is possible to make the observer perceive portions with relatively high gloss as projections and portions with relatively low gloss as recesses.

In production of such decorative sheets, for example, a printed layer including a pattern corresponding to portions where recesses are to be expressed is first formed on one surface of a substrate. Next, a transparent or translucent first gloss adjustment layer having a low gloss is formed on the entire surface of the substrate on which the printed layer has been formed. Next, a transparent or translucent second gloss adjustment layer having a high gloss is formed on the entire surface of the first gloss adjustment layer except for the region corresponding to the pattern. By reversing the relationship between the high gloss and low gloss of the first and second gloss adjustment layers, a decorative sheet with a reversed relationship between the projections and recesses can be obtained.

According to this method, by simply preparing two types of coating materials that have different gloss levels, it is possible to express a three-dimensional uneven texture on any substrate without requiring special chemicals or the like. In addition, the formation of the gloss adjustment layers having different gloss levels can be performed by a conventional printing method such as gravure printing after the formation of the design pattern (patterned ink layer). Therefore, no special equipment is required, production efficiency is high, and the second synthetic coating layer can be easily aligned with the pattern. Moreover, since the second gloss adjustment layer can be much thinner than the height difference of the unevenness that should be perceived by the observer, it is possible to reduce the amount of resins used, which is advantageous in terms of flexibility, and a decorative sheet having excellent bendability can be easily realized. In addition, since there is no large unevenness with large differences in height on the surface of the decorative sheet, there is also an advantage that contaminants do not remain in the recesses.

### [Citation List]

### [Patent Literature]

PTL 1: WO 2022/182259 A
PTL 2: JP 2014-188842 A

### [Summary of Invention]

The present invention has been made to provide a decorative sheet that is excellent in scratch resistance and adhesion between gloss adjustment layers.

According to an aspect of the present invention, a decorative sheet is provided which includes: a primary film layer and a surface protective layer, the surface protective layer including: a first gloss adjustment layer provided on the primary film layer, the first gloss adjustment layer containing, as a cured resin, a cured product of a first ionizing radiation-curable resin, the first ionizing radiation-curable resin being a first mixture of acrylate and methacrylate, and a second gloss adjustment layer that partially covers an upper surface of the first gloss adjustment layer, the second gloss adjustment layer containing, as a cured resin, a cured product of a second ionizing radiation-curable resin and having a higher specular gloss GS (60°) than the first gloss adjustment layer.

According to another aspect of the present invention, there is provided a decorative sheet according to the above aspect, wherein, in the first ionizing radiation-curable resin, a ratio of the number of moles of methacryloyl groups to a total number of moles of acryloyl groups and methacryloyl groups is in a range of 3% or greater and 50% or less.

According to still another aspect of the present invention, there is provided a decorative sheet according to any of the above aspects, wherein the methacrylate is a monofunctional, difunctional or trifunctional methacrylate.

According to still another aspect of the present invention, there is provided a decorative sheet according to any of the above aspects, wherein an uneven structure is provided on at least a portion of an upper surface of the first gloss adjustment layer that is not covered with the second gloss adjustment layer.

According to still another aspect of the present invention, there is provided a decorative sheet according to the above aspects, wherein an uneven structure is also provided on an upper surface of the first gloss adjustment layer that is covered with the second gloss adjustment layer.

According to still another aspect of the present invention, there is provided a decorative sheet according to the above aspects, wherein the uneven structure includes a plurality of ridged portions each projecting in a ridge-like manner.

According to still another aspect of the present invention, there is provided a decorative sheet according to the above aspects, wherein the uneven structure has a ratio RSm/Ra of an average length RSm of roughness curve elements to an arithmetic average roughness Ra in a range of 10 or greater and 900 or less.

According to still another aspect of the present invention, there is provided a decorative sheet according to any of the above aspects, wherein the first gloss adjustment layer and the second gloss adjustment layer each have a thickness in a range of 2 µm or greater and 20 µm or less.

According to still another aspect of the present invention, there is provided a decorative sheet according to any of the above aspects, wherein the first gloss adjustment layer further contains particles having an average particle size of 10 µm or less.

According to still another aspect of the present invention, there is provided a decorative sheet according to the above aspects, wherein a mass of the particles is in a range of 0.5 parts by mass or greater and 20 parts by mass or less relative to 100 parts by mass of the first ionizing radiation-curable resin.

According to still another aspect of the present invention, there is provided a decorative sheet according to any of the above aspects, wherein the first gloss adjustment layer has a specular gloss GS (60°) of 10 or less, and the second gloss adjustment layer has a specular gloss GS (60°) of 4 or greater.

According to still another aspect of the present invention, there is provided a decorative sheet according to any of the above aspects, wherein a difference between the specular gloss GS (60°) of the first gloss adjustment layer and the specular gloss GS (60°) of the second gloss adjustment layer is 1 or greater.

According to still another aspect of the present invention, there is provided a decorative material including: the decorative sheet according to any of the above aspects; and a substrate to which the decorative sheet is bonded.

According to still another aspect of the present invention, a method of producing a decorative sheet is provided, the method including: forming a first coating film on a primary film layer, the first coating film containing a first ionizing radiation-curable resin as a resin, the first ionizing radiation-curable resin being a first mixture of acrylate and methacrylate; irradiating the first coating film with ionizing radiation or ultraviolet light to semi-cure the first coating film; forming a second coating film on the semi-cured first coating film so as to partially cover an upper surface of the first coating film, the second coating film containing a second ionizing radiation-curable resin as a resin; and irradiating the first coating film and the second coating film with ionizing radiation or ultraviolet light to completely cure the first coating film and the second coating film, wherein the semi-curing the first coating film includes a first irradiation step of irradiating the first coating film with light having a wavelength of 200 nm or less.

According to still another aspect of the present invention, there is provided a method of producing a decorative sheet according to the above aspect, wherein the semi-curing the first coating film includes a second irradiation step, after the first irradiation step, of irradiating the first coating film with ionizing radiation or ultraviolet light having a longer wavelength than the light.

According to the present invention, a decorative sheet that is excellent in scratch resistance and adhesion between gloss adjustment layers is provided.

### [Brief Description of Drawings]

Fig. 1 is a cross-sectional view of a decorative material including a decorative sheet according to an embodiment of the present invention.
Fig. 2 is a cross-sectional view of a first gloss adjustment layer included in the decorative sheet of Fig. 1.
Fig. 3 is a microscopic image of a first gloss adjustment layer included in a decorative sheet according to an example of the present invention.
Fig. 4 is an enlarged cross-sectional view of a part of the first gloss adjustment layer shown in Fig. 2.

### [Description of Embodiments]

With reference to the drawings, some embodiments of the present invention will be described. The embodiments described below are more specific examples of any of the aspects described above. The matters described below can be incorporated alone or in combination into each of the above aspects.

The embodiments described below are merely example configurations for embodying the technical idea of the present invention, and the technical idea of the present invention should not limit the materials, shapes, structures, and the like of the components to those described below. The technical idea of the present invention can undergo various modifications within the technical scope defined by the disclosed claims.

It should be noted that components having the same or similar functions are denoted by the same reference signs in the drawings referred to below, and duplicated description is omitted. In addition, the drawings are schematic, and the relationship between dimensions in one direction and another direction, dimensions of a member and another member, and the like may be different from actual ones.

### <1> Decorative Material and Decorative Sheet

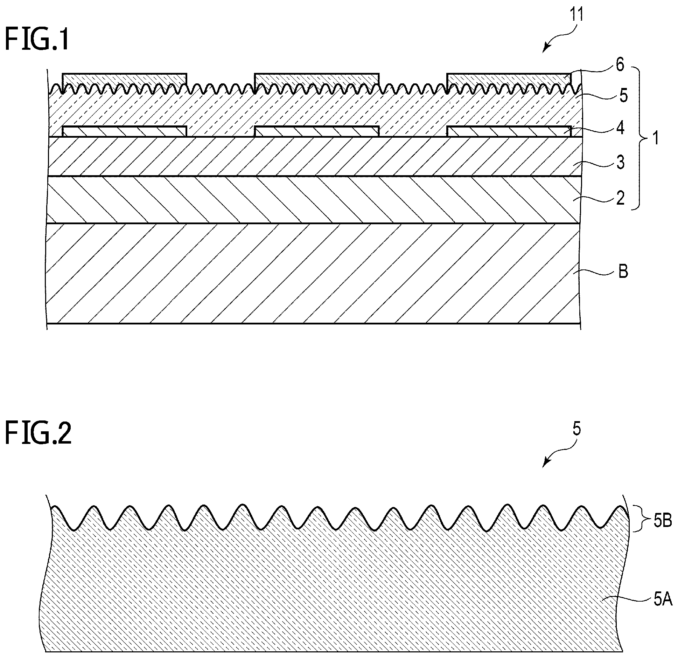

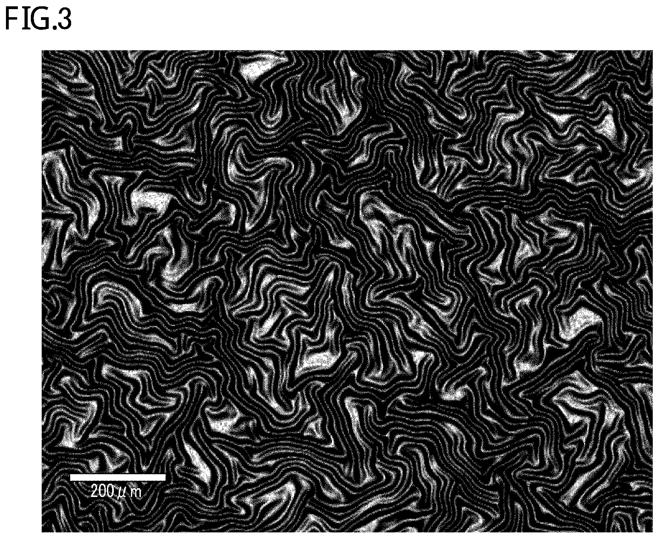

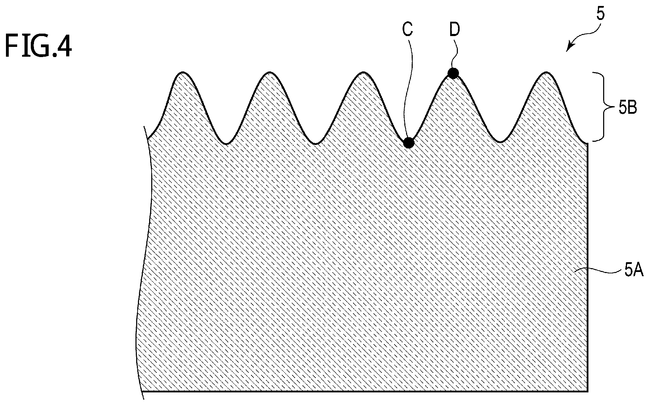

Fig. 1 is a cross-sectional view of a decorative material including a decorative sheet according to an embodiment of the present invention. Fig. 2 is a cross-sectional view of a first gloss adjustment layer included in the decorative sheet of Fig. 1. Fig. 3 is a micrograph of a first gloss adjustment layer included in a decorative sheet according to an example of the present invention. Fig. 4 is an enlarged cross-sectional view of a part of the first gloss adjustment layer shown in Fig. 2.

The cross-sections shown in Figs. 2 and 4 are taken along the thickness direction of the first gloss adjustment layer. The micrograph of Fig. 3 is a plan view photograph obtained with a laser microscope (OLS-4000 manufactured by Olympus Corporation).

A decorative material 11 shown in Fig. 1 includes a substrate B and a decorative sheet 1 bonded thereto. The decorative material 11 is a decorative plate. The decorative plate may be flat, bent, or folded. The decorative material 11 may have a shape other than a plate.

The substrate B here is a plate material. The plate material may be, for example, a wooden board, an inorganic board, a metal plate, or a composite plate made from a plurality of materials. The substrate B may have a shape other than a plate.

The decorative sheet 1 includes a primary film layer 2, a solid ink layer 3, a patterned ink layer 4, a first gloss adjustment layer 5, and a second gloss adjustment layer 6. The solid ink layer 3, the patterned ink layer 4, the first gloss adjustment layer 5, and the second gloss adjustment layer 6 are provided on the surface of the primary film layer 2 opposite to that facing the substrate B in this order from the primary film layer 2 side. Either or both of the solid ink layer 3 and the patterned ink layer 4 may be omitted. One or more other layers such as a primer layer and a transparent resin layer may be provided between the patterned ink layer 4 and the first gloss adjustment layer 5.

The elements included in the decorative sheet 1 will be sequentially described.

### <1.1> Primary Film Layer

Examples of the primary film layer 2 and materials thereof that can be used include paper such as tissue paper, resin-mixed paper, titanium paper, resin-impregnated paper, flame-resistant paper and inorganic paper; woven or non-woven fabrics made of natural fibers or synthetic fibers; synthetic resin-based base materials containing synthetic resins such as homo- or random polypropylene resins, polyolefin resins such as polyethylene resin, copolymerized polyester resins, amorphous-state crystalline polyester resins, polyethylene naphthalate resins, polybutylene resins, acrylic resins, polyamide resins, polycarbonate resins, polyvinyl chloride resins, polyvinylidene chloride resins and fluororesins; wooden base materials such as wood veneers, sliced veneers, plywood, laminate wood, particle boards and medium density fiberboards; inorganic base materials such as gypsum plates, cement plates, calcium silicate plates and pottery plates; metal-based base materials such as iron, copper, aluminum and stainless steel; and composite materials and laminates thereof. The primary film layer 2 may have various forms such as a film, a sheet, a plate, and an irregularly shaped molded body.

### <1.2> Solid Ink Layer

The solid ink layer 3 is a continuous film formed by coating one entire surface of the primary film layer 2 with ink. The solid ink layer 3 can serve as a concealing layer that conceals the substrate B or the primary film layer 2. Further, the solid ink layer 3 can also serve as a flattening layer. The solid ink layer 3 may have a monolayer structure or a multilayer structure.

The solid ink layer 3 can be formed using, for example, a printing ink (or a coating agent) obtained by dissolving or dispersing a matrix and a colorant such as a dye or a pigment in a solvent.

Examples of the matrix include various synthetic resins, such as oily nitrocellulose resins, two-component urethane resins, acrylic resins, styrene resins, polyester resins, urethane resins, polyvinyl resins, alkyd resins, epoxy resins, melamine resins, fluororesins, silicone resins, and rubber-based resins; mixtures thereof, copolymers thereof, and the like.

Examples of the colorant include inorganic pigments such as carbon black, titanium white, zinc white, rouge, chrome yellow, Prussian blue and cadmium red; organic pigments such as azo pigments, lake pigments, anthraquinone pigments, phthalocyanine pigments, isoindolinone pigments and dioxazine pigments; and mixtures thereof.

Examples of the solvent include toluene, xylene, ethyl acetate, butyl acetate, methyl alcohol, ethyl alcohol, isopropyl alcohol, acetone, methyl ethyl ketone, methyl isobutyl ketone, cyclohexanone, water, and mixtures thereof.

Functional additives such as extender pigments, plasticizers, dispersants, surfactants, tackifiers, adhesion aids, desiccants, curing agents, curing accelerants and curing retardants may be added to the above-mentioned ink in order to impart various functions.

### <1.3> Patterned Ink Layer

The patterned ink layer 4 is provided to add a design pattern to the decorative sheet 1. Examples of the design pattern include wood grain patterns, stone grain patterns, sand patterns, tiled patterns, brick patterns, fabric patterns, leather grain patterns, and geometric patterns. In the example of Fig. 1, the patterned ink layer 4 is a printing pattern that partially covers the upper surface of the solid ink layer 3. The printing pattern is provided directly below the second gloss adjustment layer 6. In other words, the second gloss adjustment layer 6 overlaps the patterned ink layer 4. That is, the printing pattern included in the patterned ink layer 4 matches the pattern of the second gloss adjustment layer 6 in shape and position when orthogonally projected onto a plane perpendicular to the thickness direction. In the following description, the state in which the shape and position in the orthogonal projection onto a plane perpendicular to the thickness direction coincide with each other may be abbreviated as "the shape and position coinciding."

The patterned ink layer 4 can be formed, for example, using the ink described above for the solid ink layer 3. The patterned ink layer 4 is formed using the number of plates necessary to express the desired design. That is, the patterned ink layer 4 may be a layer formed of a single printing pattern made of a single ink, or may be a layer formed of a plurality of printing patterns made of different inks. In the latter case, one printing pattern may match the pattern of the second gloss adjustment layer 6 in shape and position, or a combination of two or more printing patterns may match the pattern of the second gloss adjustment layer 6 in shape and position. For example, one printing pattern or a combination of two or more printing patterns may match the pattern of the second gloss adjustment layer 6 in shape and position, and the remaining printing patterns may be located in a region corresponding to the openings of the second gloss adjustment layer 6.

When the patterned ink layer 4 includes only one printing pattern, the printing pattern differs in color from the solid ink layer 3. When the patterned ink layer 4 includes a plurality of printing patterns, and the combination of these printing patterns matches the pattern of the second gloss adjustment layer 6 in shape and position, one or more of these printing patterns, for example, all of the printing patterns may differ in color from the solid ink layer 3. When the patterned ink layer 4 includes a plurality of printing patterns, one printing pattern or a combination of two or more printing patterns matches the pattern of the second gloss adjustment layer 6 in shape and position, and the remaining printing patterns are located in a region corresponding to the openings of the second gloss adjustment layer 6, one or more of the former printing patterns may differ in color from the solid ink layer 3 and from one or more of the printing patterns. For example, all of the former printing patterns may differ in color from the solid ink layer 3 and from all of the latter printing patterns.

In this example, the patterned ink layer 4 is a layer formed of a single printing pattern made of a single ink, and differs in color from the solid ink layer 3.

### <1.4> Primer Layer

As described above, the decorative sheet 1 can further include a primer layer between the patterned ink layer 4 and the first gloss adjustment layer 5. The primer layer formed on the solid ink layer 3 or the patterned ink layer 4 can adhere to the solid ink layer 3 or the patterned ink layer 4 and the first gloss adjustment layer 5, improving the durability and maintaining appearance of the decorative material 11 over a long period of time. The primer layer is preferably transparent, and may be colorless and transparent, colored and transparent, or translucent.

The primer layer may be made of, for example, a water-based composition containing a water-based resin as a main material. The water-based composition refers to a composition obtained by dissolving or dispersing a water-based resin in water or an aqueous solvent. The water-based resin may be any of a water-soluble resin (including a resin treated to be water-soluble) and a water-dispersible resin (including a resin treated to be water-dispersible). The water-based resin may be an ionizing radiation or ultraviolet-curable type, a thermosetting type, or a type having both. Examples of the aqueous solvent include a mixed solvent of an organic solvent having 5 or less carbon atoms (for example, alcohols such as ethanol and propanol) and water.

Examples of the water-soluble resin include natural products such as starch, dextrins and alginates, derivatives of natural products such as cellulose esters and cellulose ethers, and synthetic resins such as polyvinyl alcohol, polyacrylates, polyvinyl amine, acrylic nitrocellulose, polyurethane resins and polyester resins.

Examples of the water-dispersible resin include shellac, styrenated shellac, casein, styrene-maleic acid resin, rosin-maleic acid resin, acrylic resin, vinyl acetate resin, styrene resin, vinyl chloride resin, synthetic rubber latex, polyurethane resin, polyester resin, alkyd resin, epoxy ester and rosin ester.

The water-based composition may further contain additives such as silica and colorants in addition to the above-mentioned water-based resin.

The primer layer is formed by applying the above-mentioned water-based composition in a solid manner on the entire surface so as to cover the solid ink layer 3 or the patterned ink layer 4, and then curing it by irradiation with ionizing radiation and/or heating. Various known coating methods can be used, such as roll coating, curtain flow coating, wire bar coating, reverse coating, gravure coating, gravure reverse coating, air knife coating, kiss coating, blade coating, smooth coating, comma coating, spray coating, flow coating and brush coating, and the coating is performed so that the dry thickness may be, for example, about 2 µm to 20 µm.

### <1.5> Transparent Resin Layer

As described above, the decorative sheet 1 can further include a transparent resin layer between the patterned ink layer 4 and the first gloss adjustment layer 5. The transparent resin layer can contribute to improvement in abrasion resistance of the decorative sheet 1.

For example, a resin composition containing an olefin-based resin may be preferably used as the transparent resin layer. The olefin-based resin may be, for example, polypropylene, polyethylene or polybutene. The olefin-based resin may be a homopolymer or a copolymer of two or more α-olefins such as propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. The olefin-based resin may be a copolymer of ethylene or an α-olefin with another monomer, such as an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, or ethylene-butyl acrylate copolymer. In particular, in order to further improve surface strength, highly crystalline polypropylene is preferably used.

The transparent resin layer may contain additives, such as a thermal stabilizer, an ultraviolet absorber, a photostabilizer, an antiblocking agent, a catalyst scavenger, and a colorant. These additives may be suitably selected from known additives. The transparent resin layer can be formed by various lamination methods, such as a method using thermal pressure, an extrusion lamination method, and a dry lamination method.

### <1.6> First Gloss Adjustment Layer

The first gloss adjustment layer 5 is provided on the primary film layer 2. In this example, the first gloss adjustment layer 5 covers the solid ink layer 3 or the patterned ink layer 4.

The first gloss adjustment layer 5 contains a cured resin. As will be described later, the first gloss adjustment layer 5 can further contain particles. When the mass of the first gloss adjustment layer 5 is 100 parts by mass, the mass of the cured resin contained in the first gloss adjustment layer 5 is preferably 60 parts by mass or greater, more preferably 70 parts by mass or greater, and even more preferably 80 parts by mass or greater.

The first gloss adjustment layer 5 contains, as the cured resin, a cured product of a first ionizing radiation-curable resin. The "ionizing radiation" herein refers to a charged particle beam such as an electron beam. The first ionizing radiation-curable resin is cured by irradiation with ionizing radiation. The first ionizing radiation-curable resin may also be cured by irradiation with ultraviolet light.

As the first ionizing radiation-curable resin, known resins such as various monomers and commercially available oligomers can be used, and examples thereof include (meth)acrylic resins, silicone resins, polyester resins, urethane resins, amide resins, and epoxy resins. The first ionizing radiation-curable resin may be either an aqueous resin or a non-aqueous (organic solvent-based) resin. The first ionizing radiation-curable resin may be solvent-free.

The main component of the first ionizing radiation-curable resin is a first mixture of an acrylate resin and a methacrylate resin. The methacrylate enables the first coating film containing the first ionizing radiation-curable resin to be semi-cured by irradiation with ionizing radiation or ultraviolet light, thereby achieving high adhesion between the first gloss adjustment layer 5 and the second gloss adjustment layer 6.

If the main component of the first ionizing radiation-curable resin is not the first mixture and does not contain a methacrylate resin, not only the desired adhesion cannot be achieved, but also the scratch resistance and stain resistance will also be insufficient.

In the first ionizing radiation-curable resin, the ratio of the number of moles of methacryloyl groups to the total number of moles of acryloyl groups and methacryloyl groups is preferably in the range of 3% or greater and 50% or less, and more preferably in the range of 5% or greater and 40% or less. Increasing the above ratio widens a process window in which high adhesion between the first gloss adjustment layer 5 and the second gloss adjustment layer 6 can be achieved. However, if the above ratio is excessively increased, the scratch resistance of the decorative sheet 1 is lowered.

The methacrylate is preferably a monofunctional, difunctional or trifunctional methacrylate. The methacrylate may be any one of a monofunctional methacrylate, a difunctional methacrylate and a trifunctional methacrylate, or may be two or more of these.

When a methacrylate having a large number of functional groups is used, the degree of cross-linking increases and the scratch resistance is improved compared to when a methacrylate having a small number of functional groups is used. However, when a methacrylate having an excessively large number of functional groups is used, the rate of cross-linking reaction due to irradiation with ionizing radiation or ultraviolet light increases, narrowing the process window in which high adhesion between the first gloss adjustment layer 5 and the second gloss adjustment layer 6 can be achieved.

The acrylate is preferably a di- or higher acrylate, and more preferably a tri- or higher acrylate. In order to obtain a first gloss adjustment layer 5 having excellent scratch resistance, the acrylate is preferably tri- or higher functional. There is no upper limit to the number of functional groups of the acrylate, but according to one example, it is 6 or less.

The acrylate preferably contains a repeating structure. The repeating structure may be, for example, any of an ethylene oxide (EO) structure, a propylene oxide (PO) structure, or an ε-caprolactone (CL) structure. The repeating structure is preferably an ethylene oxide or a propylene oxide. In the acrylate, the above repeating structure may be in an open ring state and interposed between the acryloyl group and the methylol group.

The number of repetitions of the repeating structure is preferably 3 or more. If an acrylate having a large number of repetitions is used, the cured film is more likely to expand in the in-plane direction in a first irradiation step described later, and therefore, wrinkles corresponding to the ridged portions 5B are likely to occur on the surface of the coating film. However, if the number of repetitions is excessively large, the cross-linking density decreases, and the scratch resistance of the surface protective layer decreases. Therefore, the number of repetitions is preferably 30 or less, and more preferably 20 or less.

The number of repetitions of the repeating structure can be analyzed using MALDI-TOF-MS. The ionizing radiation-curable resin may have a molecular weight distribution. In the molecular weight distribution of the ionizing radiation-curable resin, the number of repetitions refers to the number of repetitions of the structure corresponding to the molecular weight with the highest peak in a MALDI-TOF-MS mass spectrum.

The first gloss adjustment layer 5 has a lower specular gloss GS (60°) than the second gloss adjustment layer 6. The specular gloss GS (60°) of the first gloss adjustment layer 5 is preferably 10 or less, more preferably 7 or less, and even more preferably 5 or less. The specular gloss GS (60°) of the first gloss adjustment layer 5 may be, for example, 0.5 or greater. The term "specular gloss GS (60°)" as used herein is a specular gloss measured at an incident angle of 60° using a gloss meter according to ISO 2813. The specular gloss GS (60°) may be expressed by adding "%" after the numerical value, but the "%" will be omitted here.

The upper surface of the first gloss adjustment layer 5 has an uneven structure in at least a portion that is not covered with the second gloss adjustment layer 6. In this example, the uneven structure is provided not only on the portion of the upper surface of the first gloss adjustment layer 5 that is not covered with the second gloss adjustment layer 6, but also on the portion that is covered with the second gloss adjustment layer 6. The uneven structure provided on the upper surface of the first gloss adjustment layer 5 serves to make the specular gloss GS (60°) of the first gloss adjustment layer 5 lower than the specular gloss GS (60°) of the second gloss adjustment layer 6. The uneven structure is preferably provided on both the portion of the upper surface of the first gloss adjustment layer 5 that is covered with the second gloss adjustment layer 6 and the portion that is not covered with the second gloss adjustment layer 6.

In this example, the surface of the first gloss adjustment layer 5 has an uneven structure including a plurality of ridged portions each projecting in a ridge-like manner. That is, as shown in Figs. 2 and 4, the first gloss adjustment layer 5 includes a core portion 5A which is a thin layer having a flat upper surface, and a plurality of ridged portions 5B each projecting from the upper surface of the core portion 5A in a ridge-like manner.

In the present disclosure, the ridged portion 5B may refer to, for example, a portion from the lowest part to the tip of the projection disposed on the surface of the first gloss adjustment layer 5, and the core portion 5A may refer to a portion of the first gloss adjustment layer 5 excluding the ridged portion 5B. Further, the term "ridged" refers to a projecting shape that extends linearly in plan view.

The ridged portions 5B may be curved or straight in plan view, but are preferably curved as exemplified in Fig. 3 from the viewpoint of the fingerprint resistance of the surface of the decorative sheet 1. The first gloss adjustment layer 5 having the ridged portions 5B can be formed by, for example, as will be described later, irradiating the surface of the coating film containing the first ionizing radiation-curable resin with light having a certain wavelength to expand the cured film formed on the surface of the coating film in the in-plane direction.

The uneven structure provided on the upper surface of the first gloss adjustment layer 5 preferably has a ratio RSm/Ra of the average length RSm of the roughness curve elements to the arithmetic average roughness Ra in the range of 10 or greater and 900 or less, more preferably in the range of 10 or greater and 500 or less, even more preferably in the range of 10 or greater and 400 or less, and particularly preferably in the range of 50 or greater and 350 or less. Decreasing the ratio RSm/Ra results in a smaller pitch of the projections. As a result, it becomes difficult to wipe off dirt adhering to the surface of the decorative sheet 1, and the stain resistance decreases. Increasing the ratio RSm/Ra results in a larger pitch of the projections, which reduces the effect of the uneven structure to lower the specular gloss GS (60°) of the first gloss adjustment layer 5.

The ratio RSm/Ra is preferably 80 or greater. Increasing the ratio RSm/Ra results in a larger pitch of the projections, which improves the affinity of water or detergent (water containing a surfactant or an alcohol) to the upper surface of the first gloss adjustment layer 5. When the decorative sheet 1 has a first gloss adjustment layer 5 having such surface properties, even if the surface is stained, the stain can be easily wiped off with water or a detergent.

The ratio RSm/Ra is most preferably 100 or greater. When the ratio RSm/Ra is within this range, a commercially available washing sponge can be brought into contact with the boundary of the projections and a region in the vicinity thereof on the upper surface of the first gloss adjustment layer 5. Therefore, even if the surface of the decorative sheet 1 is stained, the stain can be easily wiped off with a commercially available washing sponge.

The arithmetic average roughness Ra and the average length RSm of the roughness curve elements are measurements determined with a stylus roughness tester (according to JIS B 0601:2013).

The arithmetic average roughness Ra is preferably in the range of 0.2 µm or greater and 10.0 µm or less, more preferably in the range of 0.5 µm or greater and 5.0 µm or less, and even more preferably in the range of 0.8 µm or greater and 4.0 µm or less.

The average length RSm of the roughness curve elements is preferably in the range of 50 µm or greater and 800 µm or less, more preferably in the range of 80 µm or greater and 600 µm or less, and even more preferably in the range of 100 µm or greater and 500 µm or less.

The upper surface of the first gloss adjustment layer 5 may have a sinusoidal shape in a cross-section parallel to the thickness direction and the arrangement direction of the ridged portions 5B. The "sinusoidal shape" refers to a shape in which the line from a lowest position C to a highest position D (peak) of the ridged portion 5B can be represented by a sinusoidal wave as shown in Fig. 4.

The thickness of the first gloss adjustment layer 5 is preferably in the range of 2 µm or greater and 20 µm or less, more preferably in the range of 3 µm or greater and 20 µm or less, even more preferably in the range of 5 µm or greater and 15 µm or less, and most preferably in the range of 5 µm or greater and 12 µm or less. When the thickness of the first gloss adjustment layer 5 is small, it is difficult to achieve the above-mentioned surface properties by a method described later with reference to the ratio RSm/Ra and the like. When the thickness of the first gloss adjustment layer 5 is increased, the processability of the decorative sheet 1 is reduced, and whitening is likely to occur when the decorative sheet 1 is bent.

The thickness of the first gloss adjustment layer 5 is the thickness of a layer that is equal in apparent area and volume to the first gloss adjustment layer 5 and has a flat surface. The thickness of the first gloss adjustment layer 5 may be determined, for example, by the following method. First, a cross-section parallel to the thickness direction of the first gloss adjustment layer 5 and perpendicular to the longitudinal direction of the ridged portions 5B is imaged. Next, from this cross-sectional image, the dimension of the first gloss adjustment layer 5 in the width direction of the ridged portions 5B and the area of the cross-section of the first gloss adjustment layer 5 are determined. The thickness of the first gloss adjustment layer 5 is a value obtained by dividing the area by the above dimension. When a coating solution for the first gloss adjustment layer, which will be described later, contains no solvent, the coating film made from the coating solution has the same thickness as the thickness of the first gloss adjustment layer 5.

The thickness of the surface protective layer 5 may be set so that the ratio of the thickness (or height) of the ridged portion 5B to the thickness of the core portion 5A (thickness of ridged portion 5B / thickness of core portion 5A) is preferably in the range of 0.01 or greater and 2.0 or less, and more preferably in the range of 0.1 or greater and 1.0 or less.

The first gloss adjustment layer 5 contains, as the cured resin, a cured product of a first ionizing radiation-curable resin. As described above, the ionizing radiation may refer to a charged particle beam such as an electron beam. The first ionizing radiation-curable resin is cured by irradiation with ionizing radiation. The first ionizing radiation-curable resin may also be cured by irradiation with ultraviolet light. The first ionizing radiation-curable resin used here is cured by irradiation with light with a wavelength of 200 nm or less and also has a high absorption coefficient (extinction coefficient) for this light. As described above, the first gloss adjustment layer 5 having the ridged portions 5B can be formed by irradiating the surface of the coating film containing the first ionizing radiation-curable resin with light having a wavelength of 200 nm or less to expand the cured film formed on the surface of the coating film in the in-plane direction.

The first gloss adjustment layer 5 can further contain particles in addition to the cured resin.

Examples of the particles contained in the first gloss adjustment layer 5 include particles made of organic materials such as polyethylene (PE) wax, polypropylene (PP) wax and resin beads, or particles made of inorganic materials such as silica, glass, alumina, titania, zirconia, calcium carbonate and barium sulfate.

The average particle size (D50) of the particles is preferably in the range of 10 µm or less, more preferably in the range of 1 µm or greater and 8 µm or less, even more preferably in the range of 2 µm or greater and 7 µm or less, and most preferably in the range of 3 µm or greater and 6 µm or less. When the average particle size (D50) of the particles is large, the particles may easily detach from the first gloss adjustment layer 5, making it difficult to achieve high scratch resistance. Small particles are less effective in generating uniform wrinkles.

The "average particle size" or "average particle size (D50)" as used herein is a median diameter (D50) measured by a laser diffraction/scattering particle size distribution analyzer. When a coating liquid for the first gloss adjustment layer contains particles, the first gloss adjustment layer 5 obtained from the coating solution also contains the particles. The average particle size of the particles contained in the first gloss adjustment layer 5 may be a value obtained by actually measuring and averaging the particle sizes of multiple particles through cross-section observation. The value thus obtained is substantially the same value as the median diameter (D50) measured by a laser diffraction/scattering particle size distribution analyzer. Thus, the above-described range of the average particle size may also be read as the range of the average particle size of the particles contained in the first gloss adjustment layer.

The amount of particles in the first gloss adjustment layer 5 is preferably in the range of 0.5 mass% or greater and 20 mass% or less relative to 100 parts by mass of the cured resin, more preferably in the range of 0.5 parts by mass or greater and 10 parts by mass or less, even more preferably in the range of 2 parts by mass or greater and 8 parts by mass or less, and most preferably in the range of 2 parts by mass or greater and 6 parts by mass or less.

The particle content within the above range is particularly effective in generating uniform wrinkles. When the particle content is excessively large, the particles may easily detach from the first gloss adjustment layer 5, making it difficult to achieve high scratch resistance.

### <1.7> Second Gloss Adjustment Layer

The second gloss adjustment layer 6 partially covers the upper surface of the first gloss adjustment layer 5. The second gloss adjustment layer 6, together with the first gloss adjustment layer 5, constitutes a surface protective layer.

The second gloss adjustment layer 6 faces the patterned ink layer 4 with the first gloss adjustment layer 5 interposed therebetween. The second gloss adjustment layer 6 matches the patterned ink layer 4 in shape and position.

In this example, the second gloss adjustment layer 6 completely matches the patterned ink layer 4 in shape and position, but other configurations may be adopted. For example, the orthogonal projection of the patterned ink layer 4 onto a plane perpendicular to the thickness direction may be at least partially spaced from and located inside the contour of the orthogonal projection of the second gloss adjustment layer 6 onto the plane.

Further, in this example, the patterned ink layer 4 is formed of a single printing pattern, but when the patterned ink layer 4 is formed of a plurality of printing patterns having different colors, the second gloss adjustment layer 6 may match the combination of these printing patterns in shape and position. Alternatively, in this case, the second gloss adjustment layer 6 may have a shape and position that matches one or a combination of two or more of these printing patterns, and the remaining printing patterns may be provided at positions that do not face the second gloss adjustment layer 6.

It is preferred that 50% or more, preferably 70% or more, and even more preferably 90% or more of the area of the orthogonal projection of the second gloss adjustment layer 6 onto a plane perpendicular to the thickness direction overlaps with the orthogonal projection onto the plane of one printing pattern or a combination of two or more printing patterns that matches the second gloss adjustment layer 6 in shape and position.

The second gloss adjustment layer 6 has higher specular gloss GS (60°) than the first gloss adjustment layer 5. The specular gloss GS (60°) of the second gloss adjustment layer 6 is preferably 4 or greater, more preferably 6 or greater, and even more preferably 8 or greater. The specular gloss GS (60°) of the second gloss adjustment layer 6 may be, for example, 30 or less.

The difference between the specular gloss GS (60°) of the first gloss adjustment layer 5 and the specular gloss GS (60°) of the second gloss adjustment layer 6 is preferably 1, more preferably 2 or greater, and even more preferably 3 or greater. The difference may be, for example, 5 or less.

The second gloss adjustment layer 6 contains, as the cured resin, a cured product of a second ionizing radiation-curable resin. The "ionizing radiation" herein is as described above, and refers to a charged particle beam such as an electron beam. The second ionizing radiation-curable resin is cured by irradiation with ionizing radiation. The second ionizing radiation-curable resin may also be cured by irradiation with ultraviolet light.

The second ionizing radiation-curable resin is a resin having an ionizing radiation-curable functional group. Examples of the ionizing radiation-curable functional group include an ethylenically unsaturated bond group such as an acryloyl group, a methacryloyl group, a vinyl group and an allyl group, an epoxy group, and an oxetanyl group. As the second ionizing radiation-curable resin, known resins such as various monomers and commercially available oligomers can be used, and examples thereof include (meth)acrylic resins, silicone resins, polyester resins, urethane resins, amide resins, and epoxy resins. The second ionizing radiation-curable resin may be either an aqueous resin or a non-aqueous (organic solvent-based) resin. The second ionizing radiation-curable resin may be solvent-free.

From the viewpoint of scratch resistance, the main component of the second ionizing radiation-curable resin may be, for example, an acrylate. The main component refers to a component that is contained in an amount of 60 parts by mass or greater, more preferably 70 parts by mass or greater, and most preferably 80 parts by mass or greater, relative to 100 parts by mass of the constituent resin components.

The acrylate may preferably be a di- or higher acrylate, and more preferably a tri- or higher acrylate. From the viewpoint of scratch resistance, the acrylate is preferably tri- or higher functional. There is no upper limit to the number of functional groups of the acrylate, but according to one example, it is 6 or less.

When the second ionizing radiation-curable resin contains an acrylate, it may further contain a methacrylate. For example, the second ionizing radiation-curable resin may be a second mixture of acrylate and methacrylate, in which the ratio of the number of moles of methacryloyl groups to the total number of moles of acryloyl groups and methacryloyl groups is smaller than that of the first mixture. The ratio in the second mixture may be, for example, 90% or less, or 80% or less, of the ratio in the first mixture.

The second gloss adjustment layer 6 may further contain the above-mentioned particles. When the second gloss adjustment layer 6 contains particles, the amount of particles contained in the second gloss adjustment layer 6 is preferably in the range of 0.5 mass% or greater and 20 mass% or less relative to 100 parts by mass of the cured resin, more preferably in the range of 0.5 parts by mass or greater and 10 parts by mass or less, even more preferably in the range of 2 parts by mass or greater and 8 parts by mass or less, and most preferably in the range of 2 parts by mass or greater and 6 parts by mass or less.

The particle content within the above range is particularly effective in improving scratch resistance. When the particle content is excessively large, the particles may easily detach from the second gloss adjustment layer 6, making it difficult to achieve high scratch resistance.

The thickness of the second gloss adjustment layer 6 is preferably in the range of 2 µm or greater and 20 µm or less, more preferably in the range of 3 µm or greater and 20 µm or less, and even more preferably in the range of 5 µm or greater and 15 µm or less. When the thickness of the second gloss adjustment layer 6 is decreased, the scratch resistance is reduced. When the thickness of the second gloss adjustment layer 6 is increased, the processability of the decorative sheet 1 is reduced, and whitening is likely to occur when the decorative sheet 1 is bent.

### <2> Method for Producing Decorative Sheet

The decorative sheet 1 is produced by, for example, the following method.

First, a solid ink layer 3 is formed on one surface of a primary film layer 2. The solid ink layer 3 can be formed by various printing methods such as gravure printing, offset printing, screen printing, electrostatic printing and ink jet printing, or various coating methods such as roll coating, knife coating, microgravure coating and die coating.

Next, a patterned ink layer 4 is formed on the solid ink layer 3. The patterned ink layer 4 can be formed, for example, by various printing methods such as gravure printing, offset printing, screen printing, electrostatic printing and ink jet printing. Among these methods, gravure printing is preferred since it allows relatively high speed printing and is advantageous in terms of cost.

Next, a first coating film made of a coating liquid for a first gloss adjustment layer is formed on the surface of the primary film layer 2 so as to cover the solid ink layer 3 and the patterned ink layer 4. The first coating film can be formed by various printing methods such as gravure printing, offset printing, screen printing, electrostatic printing and ink jet printing, or various coating methods such as roll coating, knife coating, microgravure coating and die coating.

The coating liquid for a first gloss adjustment layer contains the above-mentioned first ionizing radiation-curable resin. As described above, the first ionizing radiation-curable resin is a first mixture of acrylate and methacrylate.

The coating liquid for a first gloss adjustment layer can further contain other components such as the above-mentioned particles, solvents and one or more additives for improving the functionality of the final product, such as antibacterial agents and antifungal agents. The coating liquid for a first gloss adjustment layer may further contain other additives, such as an ultraviolet absorber and a photostabilizer. Examples of the ultraviolet absorber include benzotriazole-based, benzoate-based, benzophenone-based, and triazine-based ultraviolet absorbers. Examples of the photostabilizer include hindered amine-based photostabilizers.

In a third irradiation step described later, when the first coating film is completely cured by irradiation with ultraviolet light, the coating liquid for a first gloss adjustment layer preferably further contains a photoinitiator. The photoinitiator is not particularly limited, and examples thereof include benzophenone-based, acetophenone-based, benzoin ether-based, and thioxanthone-based photoinitiators.

Next, the first coating film is irradiated with ionizing radiation or ultraviolet light to semi-cure the first coating film. The "semi-curing" as used herein refers to a state in which C=C bonds derived from an acryloyl group and a methacryloyl group sufficiently remain although the coating film has solidified. In semi-curing the first coating film, for example, a first irradiation step and a second irradiation step described below may be sequentially performed.

In the first irradiation step, the first coating film is irradiated with first radiation. The first radiation is light having a wavelength of 200 nm or less.

The first ionizing radiation-curable resin contained in the coating liquid for a first gloss adjustment layer has a high absorption coefficient for the first radiation. Therefore, the first radiation incident on the first coating film can reach a position of only tens to hundreds of nanometers below the outermost surface. Thus, in the first irradiation step, cross-linking reactions proceed in the surface region of the first coating film to form an ultrathin cured film, whereas the other regions remain uncured because cross-linking reactions do not proceed.

The first coating film after the first irradiation step has wrinkles on its surface that correspond to the ridged portions 5B. The present inventors believe that the reason why wrinkles occur on the surface of the coating film in the first irradiation step is as follows.

As described above, the first radiation can reach a position of only tens to hundreds of nanometers below the outermost surface of the first coating film. That is, the first ionizing radiation-curable resin cross-links only in the surface of the first coating film, and the regions deeper than tens to hundreds of nanometers below the outermost surface are uncured and have highly fluid molecules. Such highly fluid molecules swell the cured film and increase the volume of the cured film. In response to the in-plane compressive stress generated when the volume increases in an in-plane direction, the cured film buckles to cause wrinkles on the surface of the first coating film.

The first radiation can be extracted from excimer VUV (Vacuum Ultra Violet) light. The excimer VUV light can be produced from a noble gas or noble gas halide compound lamp. When a lamp having a noble gas or a noble gas halide compound gas sealed therein is externally provided with high-energy electrons, a large quantity of discharge plasma (dielectric barrier discharge) is generated. This plasma discharge excites atoms of the discharge gas (noble gas) and instantaneously converts them into an excimer state. When the excimer state returns to the ground state, light in the excimer-specific wavelength region is emitted.

The gas used for the excimer lamp may be any conventionally used gas as long as the gas causes emission of light at 200 nm or less. The gas used can be a noble gas, such as Xe, Ar, or Kr, or a mixed gas of noble gas and halogen, such as ArBr or ArF. Light from the excimer lamp has different wavelengths (center wavelengths) for different gases, such as about 172 nm (Xe), about 126 nm (Ar), about 146 nm (Kr), about 165 nm (ArBr) and about 193 nm (ArF).

In consideration of the magnitude of photon energy and the difference between the wavelength and the bond energy of organic matter, a xenon lamp that emits excimer light having a center wavelength of 172 nm is preferably used as a light source. Also, in consideration of facility maintenance costs, material availability, and the like, a xenon lamp is preferably used as a light source.

The first irradiation step is performed under an atmosphere having a low oxygen concentration. Oxygen has a high extinction coefficient for light at 200 nm or less. Thus, the first irradiation step may preferably be performed, for example, under a nitrogen gas atmosphere. The oxygen concentration of the gas phase in the first irradiation step, or the concentration of the residual oxygen in the reactive atmosphere, is preferably 2,000 ppm or less, and more preferably 1,000 ppm or less.

The oxygen in the atmosphere inhibits radical polymerization. Therefore, the concentration of the residual oxygen in the reactive atmosphere influences wrinkling in the surface of the second coating film. Thus, when the concentration of the residual oxygen in the reactive atmosphere is changed, the surface properties of the second gloss adjustment layer 6 may change.

The integrated light intensity of the first radiation is preferably in the range of 0.5 mJ/cm² or greater and 200 mJ/cm² or less, more preferably in the range of 1 mJ/cm² or greater and 100 mJ/cm² or less, even more preferably in the range of 3 mJ/cm² or greater and 50 mJ/cm² or less, and most preferably in the range of 5 mJ/cm² or more and 30 mJ/cm² or less. When the integrated light intensity is reduced, the expansion of the cured film in an in-plane direction is reduced. When the integrated light intensity is increased, the surface state of the second coating film deteriorates.

In the second irradiation step, the first coating film is irradiated with second radiation. The second radiation may be, for example, ionizing radiation. The ionizing radiation is a charged particle beam such as an electron beam as described above. The second radiation may be ultraviolet light for which the first ionizing radiation-curable resin exhibits a small absorption coefficient. The wavelength of the ultraviolet light irradiated to the first coating film is preferably greater than 200 nm, more preferably in the range of 230 nm or greater and 450 nm or less, and even more preferably in the range of 250 nm or greater and 400 nm or less.

When the first coating film is irradiated with ionizing radiation or the above ultraviolet light, the curing can proceed substantially uniformly over the entire thickness of the first coating film.

The irradiation of the first coating film with the second radiation is performed so that the unreacted rate of the first coating film, that is, the ratio of the number of C=C bonds after irradiation with the second radiation to the number of C=C bonds before irradiation with the first radiation is preferably in the range of 5% or greater and 80% or less, more preferably in the range of 10% or greater and 60% or less, and even more preferably in the range of 15% or greater and 50% or less.

The irradiation of the first coating film with the second radiation is performed so that the integrated light intensity is preferably in the range of 3% or greater and 30% or less of the minimum integrated light intensity required to completely cure the first coating film, more preferably in the range of 5% or greater and 25% or less, and even more preferably in the range of 8% or greater and 20% or less.

In one example, the minimum integrated light intensity required to completely cure the first coating film may be in the range of 10 mJ/cm² or greater and 1,000 mJ/cm² or less.

The irradiation of the first coating film with the second radiation is performed so that the absorbed dose is preferably in the range of 0.2% or greater and 50% or less of the minimum absorbed dose required to completely cure the first coating film, more preferably in the range of 0.5% or greater and 40% or less, and even more preferably in the range of 1% or greater and 30% or less.

In one example, the minimum absorbed dose required to completely cure the first coating film may be in the range of 5 kGy or greater and 200 kGy or less.

As described above, the first ionizing radiation-curable resin further contains methacrylate in addition to acrylate. The methacrylate reduces the rate of cross-linking reaction caused by irradiation with the first radiation, widening the process window in which the desired state of cure can be achieved.

Next, a second coating film made of a coating liquid for a second gloss adjustment layer is formed on the semi-cured first coating film. The second coating film is formed so as to partially cover the upper surface of the first coating film. Specifically, the second coating film is formed so as to face the patterned ink layer 4 with the first coating film interposed therebetween. The second coating film can be formed, for example, by various printing methods such as gravure printing, offset printing, screen printing, electrostatic printing and ink jet printing. Among these methods, gravure printing is preferred.

The coating liquid for a second gloss adjustment layer contains the above-mentioned second ionizing radiation-curable resin. As described above, the second ionizing radiation-curable resin may be a resin having an ionizing radiation-curable functional group. In one example, the second ionizing radiation-curable resin may be an acrylate. In another example, the second ionizing radiation-curable resin may be a second mixture of acrylate and methacrylate, in which the ratio of the number of moles of methacryloyl groups to the total number of moles of acryloyl groups and methacryloyl groups is smaller than that of the first mixture.

The coating liquid for a second gloss adjustment layer can further contain other components such as the above-mentioned particles, solvents and one or more additives for improving the functionality of the final product, such as antibacterial agents and antifungal agents. The coating liquid for a second gloss adjustment layer may further contain other additives, such as an ultraviolet absorber and a photostabilizer. Examples of the ultraviolet absorber include benzotriazole-based, benzoate-based, benzophenone-based, and triazine-based ultraviolet absorbers. Examples of the photostabilizer include hindered amine-based photostabilizers.

Next, the first coating film and the second coating film are irradiated with ionizing radiation or ultraviolet light to completely cure the first coating film and the second coating film. For example, a third irradiation step described below is performed.

In the third irradiation step, the first coating film and the second coating film are irradiated with third radiation. The third radiation is ionizing radiation or ultraviolet light having a longer wavelength than the light irradiated in the first irradiation step. The third radiation may be any of those described above for the first radiation.

In the third irradiation step, the cross-linking reaction proceeds over the entire thickness of each of the first coating film and the second coating film. Since the first coating film is in the semi-cured state at the time of starting the third irradiation step, a cross-linking reaction may occur between the molecules contained in the first coating film and the molecules contained in the second coating film in the region where the first coating film and the second coating film are in contact with each other. Therefore, high adhesion can be achieved between the first gloss adjustment layer 5 and the second gloss adjustment layer 6. Further, in the third irradiation step, the curing can proceed substantially uniformly over the entire thickness of the second coating film. Therefore, unlike the first coating film, the second coating film after complete curing does not have unevenness on the surface.

The integrated light intensity of the third radiation is preferably in the range of 10 mJ/cm² or greater and 500 mJ/cm² or less, more preferably in the range of 50 mJ/cm² or greater and 400 mJ/cm² or less, and even more preferably in the range of 100 mJ/cm² or greater and 300 mJ/cm² or less.

The irradiation with the third radiation is performed so that the absorbed dose is preferably in the range of 5 kGy or greater and 200 kGy or less, more preferably in the range of 10 kGy or greater and 150 kGy or less, and even more preferably in the range of 15 kGy or greater and 100 kGy or less.

In the third irradiation step, if a layer having sufficient strength cannot be obtained only by irradiation with a single type of radiation, the irradiation may be performed while changing the type of the third radiation. For example, irradiation with ionizing radiation may be first performed, and then irradiation with ultraviolet light having a longer wavelength than the light irradiated in the first irradiation step may be performed. Alternatively, irradiation with ultraviolet light having a longer wavelength than the light irradiated in the first irradiation step may be first performed, and then irradiation with ionizing radiation may be performed. Alternatively, irradiation with ultraviolet light having a longer wavelength than the light irradiated in the first irradiation step may be first performed, and then irradiation with ultraviolet light having an even longer wavelength may be performed.

Thus, a decorative sheet 1 is obtained. In the decorative sheet 1 obtained by the above method, there is no interface between the core portion 6A and the ridged portion 6B, and they are formed integrally.

### <3> Effects

The decorative sheet 1 includes the first gloss adjustment layer 5 and the second gloss adjustment layer 6 that partially covers the first gloss adjustment layer 5. The first gloss adjustment layer 5 and the second gloss adjustment layer 6 differ in specular gloss GS (60°). The second gloss adjustment layer 6 has higher specular gloss GS (60°) than the first gloss adjustment layer 5. In particular, when the first gloss adjustment layer 5 has the above-mentioned surface properties, the difference between the specular gloss GS (60°) of the first gloss adjustment layer 5 and the specular gloss GS (60°) of the second gloss adjustment layer 6 can be increased. The difference in gloss can contribute to the expression of a three-dimensional uneven texture.

Further, in the decorative sheet 1, the second gloss adjustment layer 6 matches the patterned ink layer 4 in shape and position. Therefore, the decorative sheet 1 can express a three-dimensional uneven texture so that the portions corresponding to the patterned ink layer 4 are perceived as projections and the other portions are perceived as recesses. Thus, the decorative sheet 1 enables a luxurious design that resembles, for example, natural wood or natural stone by appropriately selecting the color of the solid ink layer 3 and the color of the patterned ink layer 4.

Further, in the decorative sheet 1, the first gloss adjustment layer 5 contains, as the cured resin, a cured product of the first ionizing radiation-curable resin, and the first ionizing radiation-curable resin is a first mixture of acrylate and methacrylate. The acrylate contributes to improvement in scratch resistance, and the methacrylate contributes to improvement in adhesion between the first gloss adjustment layer 5 and the second gloss adjustment layer 6. Therefore, the decorative sheet 1 is excellent in scratch resistance and adhesion between the gloss adjustment layers.

Further, the uneven structure including the ridged portions 5B formed on the upper surface of the first gloss adjustment layer 5 by the above-mentioned method is finer than an uneven structure formed by mechanical processing such as embossing. Since the decorative sheet 1 includes such a fine uneven structure on the upper surface of the first gloss adjustment layer 5, the decorative sheet 1 has a matte finish and excellent fingerprint resistance.

### <4> Modified Examples

The decorative sheet 1 can be variously modified.

For example, the second gloss adjustment layer 6 may match the portion of the solid ink layer 3 that is not covered with the patterned ink layer 4 in shape and position. Such a modified decorative sheet 1 can express a three-dimensional uneven texture so that the portions corresponding to the patterned ink layer 4 are perceived as recesses and the other portions are perceived as projections.

In the above-mentioned decorative sheet 1, the projections provided on the upper surface of the first gloss adjustment layer 5 have a ridged shape. These projections may not necessarily be ridge-shaped. For example, each of these projections may be a part of a particle.

In the decorative sheet 1, the upper surface of the second gloss adjustment layer 6 is flat. An uneven structure may be provided in this region as long as the above-mentioned gloss relationship is maintained. The uneven structure may be a structure similar to that described above for the ridged portions 5B, or may be a structure in which a plurality of projections, each of which consists of a part of a particle, are arranged.

### Examples

Examples of the present invention will be described below. The term "particle size" as used herein is the "average particle size (D50)" described above.

### <Example 1>

A decorative sheet 1 described above with reference to Figs. 1 to 4 was produced by the following method.

First, impregnated paper having a basis weight of 50 g/m² (GFR-506, manufactured by Kohjin Co., Ltd.) was prepared as the primary film layer 2. On one surface of the primary film layer 2, a solid ink layer 3 and a patterned ink layer 4 were formed in this order using oily nitrocellulose resin gravure printing inks (various colors of PCNT (PCRNT) manufactured by Toyo Ink Co., Ltd.). The design pattern of the patterned ink layer 4 was a wood grain pattern.

Next, a coating liquid for a first gloss adjustment layer having the following composition was applied onto the solid ink layer 3 and the patterned ink layer 4. The coating liquid for a first gloss adjustment layer was applied so that the thickness of the first gloss adjustment layer 5 was 5 µm.

### (Coating Liquid for First Gloss Adjustment Layer)

- Ionizing radiation-curable resin R1
   Type: trimethylolpropane EO-modified triacrylate (3 mol EO added)
   Product name: Miramer M3130 (manufactured by Miwon)
   Compounding amount: 50 parts by mass
- Ionizing radiation-curable resin R2
   Type: methoxypolyethylene glycol (400) methacrylate
   Product name: NK Ester M-90G (manufactured by Shin-Nakamura Chemical Co., Ltd.)
   Compounding amount: 50 parts by mass
- Particles
   Product name: SYLYSIA 250N (manufactured by Fuji Silysia Chemical Ltd.)
   Particle size: 5 µm
   Compounding amount: 0.5 parts by mass

The first irradiation step was then performed. Specifically, at atmospheric pressure, under a nitrogen gas atmosphere having an oxygen concentration of 500 ppm, a Xe excimer lamp was used to irradiate the surface of the first coating film made of the coating liquid for a first gloss adjustment layer with ultraviolet light having a wavelength of 172 nm until the integrated light intensity reached 50 mJ/cm². This produced wrinkling on the surface of the first coating film.

Subsequently, the second irradiation step was performed. Specifically, the first coating film was irradiated with an electron beam as ionizing radiation to that the absorbed dose of the first coating film was 5 kGy. Thus, the first coating film was semi-cured.

Next, a coating liquid for a second gloss adjustment layer having the following composition was printed on the portion of the first coating film corresponding to the patterned ink layer 4. The coating liquid for a second gloss adjustment layer was printed so that the thickness of the second gloss adjustment layer 6 was 5 µm.

### (Coating Liquid for Second Gloss Adjustment Layer)

- Ionizing radiation-curable resin R
   Type: trimethylolpropane EO-modified triacrylate (3 mol EO added)
   Product name: Miramer M3130 (manufactured by Miwon)
   Compounding amount: 100 parts by mass
- Particles
   Product name: SYLYSIA 250N (manufactured by Fuji Silysia Chemical Ltd.)
   Particle size: 5 µm
   Compounding amount: 20 parts by mass

Subsequently, the third irradiation step was performed. Specifically, the first and second coating films were irradiated with 100 kGy of ionizing radiation to completely cure the entirety of the first and second coating films, thereby forming the first gloss adjustment layer 5 and the second gloss adjustment layer 6.

Thus, a decorative sheet 1 was obtained.

### <Example 2>

A decorative sheet 1 described with reference to Figs. 1 to 4 was produced in the same manner as in Example 1, except that, in the coating liquid for a first gloss adjustment layer, the compounding amount of the ionizing radiation-curable resin R1 was changed to 80 parts by mass and the compounding amount of the ionizing radiation-curable resin R2 was changed to 20 parts by mass.

### <Example 3>

A decorative sheet 1 described with reference to Figs. 1 to 4 was produced in the same manner as in Example 1, except that, in the coating liquid for a first gloss adjustment layer, the compounding amount of the ionizing radiation-curable resin R1 was changed to 90 parts by mass and the compounding amount of the ionizing radiation-curable resin R2 was changed to 10 parts by mass.

### <Example 4>

A decorative sheet 1 described with reference to Figs. 1 to 4 was produced in the same manner as in Example 1, except that the following resin was used as the ionizing radiation-curable resin R2, and in the coating liquid for a first gloss adjustment layer, the compounding amount of the ionizing radiation-curable resin R1 was changed to 90 parts by mass and the compounding amount of the ionizing radiation-curable resin R2 was changed to 10 parts by mass.

- Ionizing radiation-curable resin R2
   Type: isobornyl methacrylate
   Product name: Light Ester IB-X (manufactured by Kyoeisha Chemical Co., Ltd.)

### <Example 5>

A decorative sheet 1 described with reference to Figs. 1 to 4 was produced in the same manner as in Example 1, except that the following resin was used as the ionizing radiation-curable resin R2 in the coating liquid for a first gloss adjustment layer.

- Ionizing radiation-curable resin R2
   Type: EO-modified bisphenol A dimethacrylate (10 mol EO added)
   Product name: NK Ester BPE-500 (manufactured by Shin-Nakamura Chemical Co., Ltd.)

### <Example 6>

A decorative sheet 1 described with reference to Figs. 1 to 4 was produced in the same manner as in Example 1, except that the following resin was used as the ionizing radiation-curable resin R2, and in the coating liquid for a first gloss adjustment layer, the compounding amount of the ionizing radiation-curable resin R1 was changed to 80 parts by mass and the compounding amount of the ionizing radiation-curable resin R2 was changed to 20 parts by mass.

- Ionizing radiation-curable resin R2
   Type: EO-modified bisphenol A dimethacrylate (10 mol EO added)
   Product name: NK Ester BPE-500 (manufactured by Shin-Nakamura Chemical Co., Ltd.)

### <Example 7>

A decorative sheet 1 described with reference to Figs. 1 to 4 was produced in the same manner as in Example 1, except that the following resin was used as the ionizing radiation-curable resin R2, and in the coating liquid for a first gloss adjustment layer, the compounding amount of the ionizing radiation-curable resin R1 was changed to 90 parts by mass and the compounding amount of the ionizing radiation-curable resin R2 was changed to 10 parts by mass.

- Ionizing radiation-curable resin R2
   Type: EO-modified bisphenol A dimethacrylate (10 mol EO added)
   Product name: NK Ester BPE-500 (manufactured by Shin-Nakamura Chemical Co., Ltd.)

### <Example 8>

A decorative sheet 1 described with reference to Figs. 1 to 4 was produced in the same manner as in Example 1, except that the following resin was used as the ionizing radiation-curable resin R2, and in the coating liquid for a first gloss adjustment layer, the compounding amount of the ionizing radiation-curable resin R1 was changed to 80 parts by mass and the compounding amount of the ionizing radiation-curable resin R2 was changed to 20 parts by mass.

- Ionizing radiation-curable resin R2
   Type: polyethylene glycol (200) dimethacrylate
   Product name: NK Ester 4G (manufactured by Shin-Nakamura Chemical Co., Ltd.)

### <Example 9>

A decorative sheet 1 described with reference to Figs. 1 to 4 was produced in the same manner as in Example 1, except that the following resin was used as the ionizing radiation-curable resin R2 in the coating liquid for a first gloss adjustment layer.

- Ionizing radiation-curable resin R2
   Type: trimethylolpropane EO-modified trimethacrylate (3 mol EO added)
   Product name: NK Ester TMPT-3EO (manufactured by Shin-Nakamura Chemical Co., Ltd.)

### <Example 10>

A decorative sheet 1 described with reference to Figs. 1 to 4 was produced in the same manner as in Example 1, except that the following resin was used as the ionizing radiation-curable resin R2 in the coating liquid for a first gloss adjustment layer.

- Ionizing radiation-curable resin R2
   Type: trimethylolpropane PO-modified trimethacrylate (3 mol PO added)
   Product name: NK Ester TMPT-3PO (manufactured by Shin-Nakamura Chemical Co., Ltd.)

### <Example 11>

A decorative sheet 1 described with reference to Figs. 1 to 4 was produced in the same manner as in Example 1, except that the amount of particles in the coating liquid for a first gloss adjustment layer was changed to 20 parts by mass, the first irradiation step was omitted, and the amount of particles in the coating liquid for a second gloss adjustment layer was changed to 15 parts by mass.

### <Example 12>

A decorative sheet 1 described with reference to Figs. 1 to 4 was produced in the same manner as in Example 1, except that the following resin was used as the ionizing radiation-curable resin R1 in the coating liquid for a first gloss adjustment layer.
- Ionizing radiation-curable resin R1
   Type: trimethylolpropane EO-modified triacrylate (9 mol EO added)
   Product name: Miramer M3190 (manufactured by Miwon)

### <Example 13>

A decorative sheet 1 described with reference to Figs. 1 to 4 was produced in the same manner as in Example 1, except that the following two types of resins were used as the ionizing radiation-curable resin R in the coating liquid for a second gloss adjustment layer.
- Acrylate resin 1
   Type: trimethylolpropane EO-modified triacrylate (3 mol EO added)
   Product name: Miramer M3130 (manufactured by Miwon)
   Compounding amount: 50 parts by mass
- Acrylate resin 2
   Type: dipentaerythritol hexaacrylate
   Product name: NK Ester A-DPH (manufactured by Shin-Nakamura chemical Co., Ltd.)
   Compounding amount: 50 parts by mass

### <Example 14>

A decorative sheet 1 described with reference to Figs. 1 to 4 was produced in the same manner as in Example 1, except that the amount of particles in the coating liquid for a first gloss adjustment layer was changed to 0 parts by mass.

### <Example 15>

A decorative sheet 1 described with reference to Figs. 1 to 4 was produced in the same manner as in Example 1, except that the amount of particles in the coating liquid for a first gloss adjustment layer was changed to 10 parts by mass.

### <Example 16>

A decorative sheet 1 described with reference to Figs. 1 to 4 was produced in the same manner as in Example 1, except that the amount of particles in the coating liquid for a first gloss adjustment layer was changed to 20 parts by mass.

### <Example 17>

A decorative sheet 1 described with reference to Figs. 1 to 4 was produced in the same manner as in Example 1, except that the thickness of the first gloss adjustment layer 5 was changed to 1 µm, and the amount of particles in the coating liquid for a second gloss adjustment layer was changed to 15 parts by mass.

### <Example 18>

A decorative sheet 1 described with reference to Figs. 1 to 4 was produced in the same manner as in Example 1, except that the thickness of the first gloss adjustment layer 5 was changed to 2 µm.

### <Example 19>

A decorative sheet 1 described with reference to Figs. 1 to 4 was produced in the same manner as in Example 1, except that the thickness of the first gloss adjustment layer 5 was changed to 20 µm.

### <Example 20>

A decorative sheet 1 described with reference to Figs. 1 to 4 was produced in the same manner as in Example 1, except that the thickness of the first gloss adjustment layer 5 was changed to 25 µm.

### <Example 21>

A decorative sheet 1 described with reference to Figs. 1 to 4 was produced in the same manner as in Example 1, except that the particle size of the particles in the coating liquid for a first gloss adjustment layer was changed to 3 µm.

### <Example 22>

A decorative sheet 1 described with reference to Figs. 1 to 4 was produced in the same manner as in Example 1, except that the particle size of the particles in the coating liquid for a first gloss adjustment layer was changed to 10 µm.

### <Example 23>

A decorative sheet 1 described with reference to Figs. 1 to 4 was produced in the same manner as in Example 1, except that the following two types of resins were used as the ionizing radiation-curable resin R1 in the coating liquid for a first gloss adjustment layer.

### (Coating Liquid for First Gloss Adjustment Layer)

- Acrylate 1
   Trimethylolpropane EO-modified triacrylate (6 mol EO added)
   Product name: Miramer M3160 (manufactured by Miwon)
   Compounding amount: 25 parts by mass
- Acrylate 2
   Type: dipentaerythritol hexaacrylate
   Product name: Miramer M600 (manufactured by Miwon)
   Compounding amount: 25 parts by mass

### <Example 24>

A decorative sheet 1 described with reference to Figs. 1 to 4 was produced in the same manner as in Example 1, except that the following two types of resins were used as the ionizing radiation-curable resin R1 in the coating liquid for a first gloss adjustment layer.

### (Coating Liquid for First Gloss Adjustment Layer)

- Acrylate 1
   Trimethylolpropane EO-modified triacrylate (6 mol EO added)
   Product name: Miramer M3160 (manufactured by Miwon)
   Compounding amount: 25 parts by mass
- Acrylate 2
   Type: ethoxylated pentaerythritol tetraacrylate (35 mol EO added)
   Product name: NK Ester ATM-35E (manufactured by Shin-Nakamura Chemical Co., Ltd.)
   Compounding amount: 25 parts by mass

### <Comparative Example 1>

A decorative sheet similar to that described with reference to Figs. 1 to 4 was produced in the same manner as in Example 1, except that, in the coating liquid for a first gloss adjustment layer, the compounding amount of the ionizing radiation-curable resin R1 was changed to 100 parts by mass and the ionizing radiation-curable resin R2 was omitted.

### <Comparative Example 2>

A decorative sheet similar to that described with reference to Figs. 1 to 4 was produced in the same manner as in Example 1, except that, in the coating liquid for a first gloss adjustment layer, the compounding amount of the ionizing radiation-curable resin R2 was changed to 100 parts by mass and the ionizing radiation-curable resin R1 was omitted.

### <Evaluation>

Each of the above decorative sheets was evaluated as follows. Those evaluated as "AAA", "AA" or "A" were regarded as a pass because there was no problem in practical use.

### (1) Thickness of Gloss Adjustment Layer

The thickness of the first gloss adjustment layer was measured by the same method as described above.

Specifically, the decorative sheet was embedded in a resin such as a cold-setting epoxy resin or a UV-curable resin, and the resin was sufficiently cured. The resultant product was then cut so that the cross-section of the decorative sheet appeared, and the cross-section was subjected to mechanical polishing to give a measurement surface.

Subsequently, a scanning electron microscope, SIGMA 500, manufactured by Carl Zeiss Microscopy GmbH, was used to image the cross-section of the first gloss adjustment layer. In this imaging, the accelerating voltage was 0.5 keV (low accelerating voltage), the imaging mode was the SE2 mode, and the magnification was 2,000. The measurement sample was not subjected to sputtering.

Next, from this cross-sectional image, the dimension of the first gloss adjustment layer in the width direction of the ridged portions and the area of the cross-section of the first gloss adjustment layer were determined. The thickness of the first gloss adjustment layer was calculated by dividing the area by the above dimension. The thickness thus obtained was equal to the thickness of the coating film made of the coating liquid for the first gloss adjustment layer.

The thickness of the second gloss adjustment layer was measured in the same manner as described above.

### (2) Gloss

The gloss was determined by measuring the specular gloss GS (60°) using a micro-gloss 60°xs (manufactured by BYK). The "60-degree gloss" in Tables 1 to 4 below represents the specular gloss GS (60°).

### (2) Adhesion

The adhesion of the second gloss adjustment layer to the first gloss adjustment layer was evaluated by a cross-cut test specified in JIS K 5400 (abolished). Here, on the surface of the decorative sheet, cuts having a depth exceeding the interface between the first gloss adjustment layer and the second gloss adjustment layer were formed in a grid pattern at intervals of 1 mm. Thus, 100 squares arranged in a grid pattern was formed. Next, an adhesive tape was attached to the surface of the decorative sheet, and then the adhesive tape was removed from the decorative sheet. The number of squares remaining on the decorative sheet was counted, and this number was referenced to evaluate the adhesion according to the following criteria.

AAA: The number of remaining squares was 100.
AA: The number of remaining squares was in the range of 95 to 99.
A: The number of remaining squares was in the range of 90 to 94.
B: The number of remaining squares was 89 or less.

### (4) Scratch Resistance

Each decorative sheet was bonded to the wood substrate B using a urethane-based adhesive. Subsequently, a steel wool rubbing test was performed to evaluate the scratch resistance. Specifically, the decorative sheet was rubbed back-and-forth 20 times with steel wool while applying a 100 g load, and the surface of the decorative sheet was visually checked for scratches and changes in gloss.

The evaluation criteria were as follows.
AAA: Neither scratches nor changes in gloss occurred on the surface.
AA: Slight scratches and/or changes in gloss occurred on a part of the surface.
A: Slight scratches and/or changes in gloss occurred on the surface.
B: Severe scratches and/or changes in gloss occurred on the surface.

### (5) Stain Resistance

The stain resistance was evaluated by the Stain A test defined in the Japanese Agricultural Standards (JAS: Japanese Agricultural Standards). Specifically, lines with a width of 10 mm were drawn on the surface protective layer of each decorative sheet using blue ink, black quick-drying ink, and red crayon, and the decorative sheets were left to stand for 4 hours. Then, the blue ink, black quick-drying ink, and red crayon lines were wiped off with a cloth soaked in ethanol.

The evaluation criteria were as follows.
AAA: All the color lines could be easily wiped off.
AA: The color lines were partially wiped off, but slight stains were partially left.
A: The color lines were partially wiped off, but stains were partially left.
B: The color lines could not be wiped off.

Tables 1 to 3 show the evaluation results. In Tables 1 to 3, the "ratio of number of moles of methacryloyl groups" represents the ratio of the number of moles of methacryloyl groups to the total number of moles of acryloyl groups and methacryloyl groups.

**[Table 1]**

| | | | Ex. 1 | Ex. 2 | Ex. 3 | Ex. 4 | Ex. 5 | Ex. 6 |
|---|---|---|---|---|---|---|---|---|
| | Thickness (µm) | | 5 | 5 | 5 | 5 | 5 | 5 |
| | Surface shape | | Ridged | Ridged | Ridged | Ridged | Ridged | Ridged |
| | RSm/Ra | | 120 | 120 | 120 | 200 | 180 | 180 |
| | Acrylate resin 1 | Number of functional groups | 3 | 3 | 3 | 3 | 3 | 3 |
| | | Number of repetitions | 3 | 3 | 3 | 3 | 3 | 3 |
| | | Compounding amount (parts by mass) | 50 | 80 | 90 | 90 | 50 | 80 |
| First gloss adjustment layer | Acrylate resin 2 | Number of functional groups | - | - | - | - | - | - |
| | | Number of repetitions | - | - | - | - | - | - |
| | | Compounding amount (parts by mass) | - | - | - | - | - | - |
| | Methacrylate resin | Number of functional groups | 1 | 1 | 1 | 1 | 2 | 2 |
| | | Compounding amount (parts by mass) | 50 | 20 | 10 | 10 | 50 | 20 |
| | Ratio of number of moles of methacryloyl groups | | 22% | 7% | 3% | 7% | 26% | 8% |
| | Additive | Particle size (µm) | 5 | 5 | 5 | 5 | 5 | 5 |
| | | Added amount (parts by mass) | 0.5 | 0.5 | 0.5 | 0.5 | 0.5 | 0.5 |
| Second gloss adjustment layer | Thickness (µm) | | 5 | 5 | 5 | 5 | 5 | 5 |
| | Acrylate resin 1 | Number of functional groups | 3 | 3 | 3 | 3 | 3 | 3 |
| | | Compounding amount (parts by mass) | 100 | 100 | 100 | 100 | 100 | 100 |
| | Acrylate resin 2 | Number of functional groups | - | - | - | - | - | - |
| | | Compounding amount (parts by mass) | - | - | - | - | - | - |
| 60° glossiness | | First gloss adjustment layer | 2 | 2 | 2 | 4 | 4 | 4 |
| | | Second gloss adjustment layer | 8 | 8 | 8 | 8 | 8 | 8 |
| Adhesion test | | Cross-cut test | AAA | AAA | A | AA | AAA | AA |
| Scratch resistance | | Steel | A | AA | AAA | AAA | AA | AAA |
| Stain resistance | | Stain A | A | AA | AAA | AAA | AA | AAA |

**[Table 2]**

| | | | Ex. 7 | Ex. 8 | Ex. 9 | Ex. 10 | Ex. 11 | Ex. 12 | Ex. 13 |
|---|---|---|---|---|---|---|---|---|---|
| | Thickness (µm) | | 5 | 5 | 5 | 5 | 5 | 5 | 5 |
| | Surface shape | | Ridged | Ridged | Ridged | Ridged | Unevenness due to particles | Ridged | Ridged |
| | RSm/Ra | | 180 | 110 | 210 | 210 | 400 | 120 | 120 |
| | Acrylate resin 1 | Number of functional groups | 3 | 3 | 3 | 3 | 3 | 3 | 3 |
| | | Number of repetitions | 3 | 3 | 3 | 3 | 3 | 9 | 3 |
| First gloss adjustment layer | | Compounding amount (parts by mass) | 90 | 80 | 50 | 50 | 50 | 50 | 50 |
| | Acrylate resin 2 | Number of functional groups | - | - | - | - | - | - | - |
| | | Number of repetitions | - | - | - | - | - | - | - |
| | | Compounding amount (parts by mass) | - | - | - | - | - | - | - |
| | Methacrylate resin | Number of functional groups | 2 | 2 | 3 | 3 | 1 | 1 | 1 |
| | | Compounding amount (parts by mass) | 10 | 20 | 50 | 50 | 50 | 50 | 50 |
| | Ratio of number of moles of methacryloyl groups | | 4% | 19% | 49% | 47% | 22% | 32% | 22% |
| | Additive | Particle size (µm) | 5 | 5 | 5 | 5 | 5 | 5 | 5 |
| | | Added amount (parts by mass) | 0.5 | 0.5 | 0.5 | 0.5 | 20 | 0.5 | 0.5 |
| Second gloss adjustment layer | Thickness (µm) | | 5 | 5 | 5 | 5 | 5 | 5 | 5 |
| | Acrylate resin 1 | Number of functional groups | 3 | 3 | 3 | 3 | 3 | 3 | 3 |
| | | Compounding amount (parts by mass) | 100 | 100 | 100 | 100 | 100 | 100 | 50 |
| | Acrylate resin 2 | Number of functional groups | - | - | - | - | - | - | 6 |
| | | Compounding amount (parts by mass) | - | - | - | - | - | - | 50 |
| 60° glossiness | | First gloss adjustment layer | 4 | 3 | 4 | 4 | 8 | 2 | 2 |
| | | Second gloss adjustment layer | 8 | 8 | 8 | 8 | 10 | 8 | 10 |
| Adhesion test | | Cross-cut test | A | AA | A | A | AAA | AAA | AAA |
| Scratch resistance | | Steel | AAA | AAA | AAA | AAA | A | A | A |
| Stain resistance | | Stain A | AAA | AAA | AAA | AAA | A | A | A |

**[Table 3]**

| | | | Ex. 14 | Ex. 15 | Ex. 16 | Ex. 17 | Ex. 18 | Ex. 19 | Ex. 20 |
|---|---|---|---|---|---|---|---|---|---|
| | Thickness (µm) | | 5 | 5 | 5 | 1 | 2 | 20 | 25 |
| | Surface shape | | Ridged | Ridged | Ridged | Ridged | Ridged | Ridged | Ridged |
| | RSm/Ra | | 250 | 120 | 130 | 300 | 250 | 110 | 50 |
| | Acrylate resin 1 | Number of functional groups | 3 | 3 | 3 | 3 | 3 | 3 | 3 |
| | | Number of repetitions | 3 | 3 | 3 | 3 | 3 | 3 | 3 |
| | | Compounding amount (parts by mass) | 50 | 50 | 50 | 50 | 50 | 50 | 50 |
| First gloss adjustment layer | Acrylate resin 2 | Number of functional groups | - | - | - | - | - | - | - |
| | | Number of repetitions | - | - | - | - | - | - | - |
| | | Compounding amount (parts by mass) | - | - | - | - | - | - | - |
| | Methacrylate resin | Number of functional groups | 1 | 1 | 1 | 1 | 1 | 1 | 1 |
| | | Compounding amount (parts by mass) | 50 | 50 | 50 | 50 | 50 | 50 | 50 |
| | Ratio of number of moles of methacryloyl groups | | 22% | 22% | 22% | 22% | 22% | 22% | 22% |
| | Additive | Particle size (µm) | 5 | 5 | 5 | 5 | 5 | 5 | 5 |
| | | Added amount (parts by mass) | 0 | 10 | 20 | 0.5 | 0.5 | 0.5 | 0.5 |
| Second gloss adjustment layer | Thickness (µm) | | 5 | 5 | 5 | 5 | 5 | 5 | 5 |
| | Acrylate resin 1 | Number of functional groups | 3 | 3 | 3 | 3 | 3 | 3 | 3 |
| | | Compounding amount (parts by mass) | 100 | 100 | 100 | 100 | 100 | 100 | 100 |
| | Acrylate resin 2 | Number of functional groups | - | - | - | - | - | - | - |
| | | Compounding amount (parts by mass) | - | - | - | - | - | - | - |
| 60° glossiness | | First gloss adjustment layer | 6 | 2 | 2.8 | 8 | 5.5 | 2 | 1.5 |
| | | Second gloss adjustment layer | 8 | 8 | 8 | 10 | 8 | 8 | 8 |
| Adhesion test | | Cross-cut test | AAA | AAA | AAA | AAA | AAA | AAA | AAA |
| Scratch resistance | | Steel | A | A | A | A | A | A | A |
| Stain resistance | | Stain A | A | A | A | A | A | A | A |

**[Table 4]**

| | | | Ex. 21 | Ex. 22 | Ex. 23 | Ex. 24 | Comp. ex. 1 | Comp. ex. 2 |
|---|---|---|---|---|---|---|---|---|
| | Thickness (µm) | | 5 | 5 | 5 | 5 | 5 | 5 |
| | Surface shape | | Ridged | Ridged | Ridged | Ridged | Ridged | Ridged |
| | RSm/Ra | | 200 | 100 | 530 | 490 | 210 | 540 |
| | Acrylate resin 1 | Number of functional groups | 3 | 3 | 3 | 3 | 3 | - |
| | | Number of repetitions | 3 | 3 | 6 | 6 | 3 | - |
| | | Compounding amount (parts by mass) | 50 | 50 | 25 | 25 | 100 | - |
| | Acrylate resin 2 | Number of functional groups | - | - | 6 | 4 | - | - |
| | | Number of repetitions | - | - | - | 35 | - | - |
| First gloss adjustment layer | | Compounding amount (parts by mass) | - | - | 25 | 25 | - | - |
| | Methacrylate resin | Number of functional groups | 1 | 1 | 1 | 1 | - | 1 |
| | | Compounding amount (parts by mass) | 50 | 50 | 50 | 50 | - | 100 |
| | Ratio of number of moles of methacryloyl groups | | 22% | 22% | 28% | 28% | 0% | 100% |
| | Additive | Particle size (µm) | 3 | 10 | 5 | 5 | 5 | 5 |
| | | Added amount (parts by mass) | 0.5 | 0.5 | 0.5 | 0.5 | 0.5 | 0.5 |
| Second gloss adjustment layer | Thickness (µm) | | 5 | 5 | 5 | 5 | 5 | 5 |
| | Acrylate resin 1 | Number of functional groups | 3 | 3 | 3 | 3 | 3 | 3 |
| | | Compounding amount (parts by mass) | 100 | 100 | 90 | 90 | 100 | 100 |
| | Acrylate resin 2 | Number of functional groups | - | - | - | - | - | - |
| | | Compounding amount (parts by mass) | - | - | - | - | - | - |
| 60° glossiness | | First gloss adjustment layer | 6 | 1.5 | 12 | 10 | 4 | 6 |
| | | Second gloss adjustment layer | 8 | 8 | 15 | 15 | 8 | 9 |
| Adhesion test | | Cross-cut test | AAA | AAA | AAA | AAA | B | AAA |
| Scratch resistance | | Steel | A | A | AA | AA | B | B |
| Stain resistance | | Stain A | A | A | A | A | B | B |

As shown in Tables 1 to 4, the decorative sheets according to Examples 1 to 24 exhibited sufficient performance in all of the adhesion, scratch resistance and stain resistance. On the other hand, the sheet according to Comparative Example 1 had insufficient adhesion, and accordingly, the scratch resistance and stain resistance were also insufficient. The sheet according to Comparative Example 2 exhibited sufficient performance in terms of adhesion, but the performance was insufficient in terms of scratch resistance and stain resistance.

### [Reference Signs List]

- 1: Decorative sheet,
- 2: Primary film layer,
- 3: Solid ink layer,
- 4: Patterned ink layer,
- 5: First gloss adjustment layer,
- 6: Second gloss adjustment layer,
- 6A: Core portion,
- 6B: Ridged portion,
- 11: Decorative material,
- B: Substrate,
- C: Position,
- D: Position.

## Claims

1. A decorative sheet comprising:
a primary film layer and a surface protective layer,
the surface protective layer comprising:
a first gloss adjustment layer provided on the primary film layer, the first gloss adjustment layer containing, as a cured resin, a cured product of a first ionizing radiation-curable resin, the first ionizing radiation-curable resin being a first mixture of acrylate and methacrylate, and
a second gloss adjustment layer that partially covers an upper surface of the first gloss adjustment layer, the second gloss adjustment layer containing, as a cured resin, a cured product of a second ionizing radiation-curable resin and having a higher specular gloss GS (60°) than the first gloss adjustment layer.

2. The decorative sheet according to claim 1, wherein
in the first ionizing radiation-curable resin, a ratio of the number of moles of methacryloyl groups to a total number of moles of acryloyl groups and methacryloyl groups is in a range of 3% or greater and 50% or less.

3. The decorative sheet according to claim 1 or 2, wherein
the methacrylate is a monofunctional, difunctional or trifunctional methacrylate.

4. The decorative sheet according to any one of claims 1 to 3, wherein
an uneven structure is provided on at least a portion of an upper surface of the first gloss adjustment layer that is not covered with the second gloss adjustment layer.

5. The decorative sheet according to claim 4, wherein
an uneven structure is also provided on an upper surface of the first gloss adjustment layer that is covered with the second gloss adjustment layer.

6. The decorative sheet according to claim 4 or 5, wherein
the uneven structure includes a plurality of ridged portions each projecting in a ridge-like manner.

7. The decorative sheet according to any one of claims 4 to 6, wherein
the uneven structure has a ratio RSm/Ra of an average length RSm of roughness curve elements to an arithmetic average roughness Ra in a range of 10 or greater and 900 or less.

8. The decorative sheet according to any one of claims 1 to 7, wherein
the first gloss adjustment layer and the second gloss adjustment layer each have a thickness in a range of 2 µm or greater and 20 µm or less.

9. The decorative sheet according to any one of claims 1 to 8, wherein
the first gloss adjustment layer further contains particles having an average particle size of 10 µm or less.

10. The decorative sheet according to claim 9, wherein
a mass of the particles is in a range of 0.5 parts by mass or greater and 20 parts by mass or less relative to 100 parts by mass of the first ionizing radiation-curable resin.

11. The decorative sheet according to any one of claims 1 to 10, wherein
the first gloss adjustment layer has a specular gloss GS (60°) of 10 or less, and the second gloss adjustment layer has a specular gloss GS (60°) of 4 or greater.

12. The decorative sheet according to any one of claims 1 to 11, wherein
a difference between the specular gloss GS (60°) of the first gloss adjustment layer and the specular gloss GS (60°) of the second gloss adjustment layer is 1 or greater.

13. A decorative material comprising:
the decorative sheet according to any one of claims 1 to 12; and
a substrate to which the decorative sheet is bonded.

14. A method of producing a decorative sheet, the method comprising:
forming a first coating film on a primary film layer, the first coating film containing a first ionizing radiation-curable resin as a resin, the first ionizing radiation-curable resin being a first mixture of acrylate and methacrylate;
irradiating the first coating film with ionizing radiation or ultraviolet light to semi-cure the first coating film;
forming a second coating film on the semi-cured first coating film so as to partially cover an upper surface of the first coating film, the second coating film containing a second ionizing radiation-curable resin as a resin; and
irradiating the first coating film and the second coating film with ionizing radiation or ultraviolet light to completely cure the first coating film and the second coating film, wherein
the semi-curing the first coating film includes a first irradiation step of irradiating the first coating film with light having a wavelength of 200 nm or less.

15. The method of producing a decorative sheet according to claim 14, wherein
the semi-curing the first coating film includes a second irradiation step, after the first irradiation step, of irradiating the first coating film with ionizing radiation or ultraviolet light having a longer wavelength than the light.
